# EUROPEAN PATENT APPLICATION

(11) **EP 4 332 857 A1**
(43) Date of publication of application: **06.03.2024**
(21) Application number: 22192857.5
(22) Date of filing: 30.08.2022
(51) Int. Cl.: G06Q 10/0631

(54) **COMPUTER-IMPLEMENTED SYSTEM AND METHOD FOR HANDLING CODING ERRORS IN COMPUTER PROGRAMS**

(71) Applicant: Siemens Aktiengesellschaft, 80333 München (DE)
(72) Inventor: Krautwurm, Florian, 94034 Passau (DE); Metzker, Martin, 85586 Poing (DE)
(74) Representative: Siemens Patent Attorneys

(57) **Abstract**

A computer-implemented system for the handling of coding errors in computer programs belonging to projects, comprising: an input interface, configured to acquire information about a coding error of a computer program belonging to a project, wherein the coding error is part of a coding error queue, and to acquire a profile of available software developers; a matching entity, configured to implement an artificial neural network, which is adapted to match the coding error with at least one selected software developer from the available software developers; and an output interface, configured to release a matching signal, based on the match generated by the artificial neural network.

## Description

The present invention relates to a computer-implemented system and method for the handling of coding errors in computer programs.

Even in modern, agile Software Organization, where communication between software developers and project managers is fluent, bug-fixing remains an issue.

In some instances, it is not clear who is responsible for managing the bugs and assigning the bug-fixing tasks. This can lead, among other things, to delays in bug-fixing due to miscommunication.

In some other instances, the skillset of a software developers is only known inside the inner circle of a project or a team. Even inside teams, this leads to inefficient deployment of the available resources.

In commonly used bug-management tools like Jira or Gitlab the pool of software developers is run on a team-based or project-based environment. A software developer not belonging to the team or project where a coding error has to be fixed, but with the right expertise to fix the error, is simply unreachable by the bug-management tool.

As soon as one moves to sizeable companies and organizations, these limitations in bug-management only become more acute. In particular, in projects that are run as company-wide inner source or open source, the need to efficiently manage bug fixing taking into account the resources of the company becomes even more pressing.

It is an object of the present invention to provide a decentralized system and method for an efficient handling of coding errors in computer programs within a company or organization, by exploiting the potential of artificial intelligence neural networks.

The purpose of this invention is achieved through a system with the features disclosed in claim 1 and a method with the features detailed in claim 13. Preferred embodiments of the invention with advantageous features are given in the dependent claims.

A first aspect of the invention provides a computer-implemented system for the handling of coding errors in computer programs belonging to projects, comprising: an input interface, configured to acquire information about a coding error of a computer program belonging to a project, wherein the coding error is part of a coding error queue, and to acquire a profile of available software developers; a matching entity, configured to implement an artificial neural network, which is adapted to match the coding error with at least one selected software developer from the available software developers; and an output interface, configured to release a matching signal, based on the match generated by the artificial neural network.

The input and/or the output interfaces are broadly understood as entities capable of acquiring image data and delivering it for further processing. Each of them may therefore contain, at least, a central processing unit, CPU, and/or at least one graphics processing unit, GPU, and/or at least one field-programmable gate array, FPGA, and/or at least one application-specific integrated circuit, ASIC and/or any combination of the foregoing. Each of them may further comprise a working memory operatively connected to the at least one CPU and/or a non-transitory memory operatively connected to the at least one CPU and/or the working memory. Each of them may be implemented partially and/or completely in a local apparatus and/or partially and/or completely in a remote system such as a cloud computing platform.

The input interface and/or the output interface may be realized in hardware and/or software, cable-bound and/or wireless, and in any combination thereof. Any of the interfaces may comprise an interface to an intranet or the Internet, to a cloud computing service, to a remote server and/or the like. In particular, they can be implemented in cell phones and other portable user equipment.

The matching entity is any entity able to acquire data, process it and release signals. It may comprise at least a central processing unit, CPU, and/or at least one field-programmable gate array, FPGA, and/or at least one application-specific integrated circuit, ASIC and/or any combination of the foregoing. It may further comprise a working memory operatively connected to the at least one CPU and/or a non-transitory memory operatively connected to the at least one CPU and/or the working memory. It may be implemented partially and/or completely in a local apparatus (e.g. a computer, a tablet or a cellphone) and/or partially and/or completely in a remote system such as a cloud computing platform. The matching entity may further be configured to run software, e.g. executable programs and applications, or algorithms with different capabilities for data processing. The matching entity may be an artificial intelligence entity.

Available software developers refer in the spirit of the invention to software developers that have time in their time sheets to be allocated. This information can be accessible directly from the time sheets. Alternatively, software developers can proactively offer their help in other projects or other departments, e.g. through a feedback channel.

Coding errors are mistakes in program codes that impede the proper execution of the program by a processing unit as planned by the programmer. They are typically denoted as bugs. Henceforth mainly the terminology coding error is used, and only occasionally it will be referred bugs.

Whenever herein an artificial neural network is mentioned, it shall be understood as a computerized entity able to implement different data analysis methods broadly described under the terms artificial intelligence, machine learning, deep learning or computer learning. The artificial neural network can be a generative adversarial network (GAN), a convolutional neural network (CNN) or any other neural network.

A second aspect of the present invention provides a computer-implemented method for the handling of coding errors in computer programs belonging to projects, comprising the following steps: (a) acquiring information about at least one detected coding error of a computer program belonging to a project, wherein the coding error is part of a coding error queue; (b) acquiring information about available software developers; (c) matching, using an artificial neural network (210) configured and trained to receive information about the detected coding error and information about available software developers, the coding error with at least one selected software developer from the available software developers; and (d) releasing a matching signal, based on the match generated by the artificial neural network.

In particular, the method according to the second aspect of the invention may be carried out with the system according to the first aspect of the invention. The features and advantages disclosed herein in connection with the system are therefore also disclosed for the method, and vice versa.

According to a third aspect, the invention provides a computer program product comprising executable program code configured to, when executed, perform the method according to the second aspect of the present invention.

According to a fourth aspect, the invention provides a non-transient computer-readable data storage medium comprising executable program code configured to, when executed, perform the method according to the second aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

According to a fifth aspect, the invention provides a data stream comprising, or configured to generate, executable program code configured to, when executed, perform the method according to the second aspect of the present invention.

One of the main ideas underlying the present invention is to provide a system to match each existing and observed coding error of computer programs in different projects of a company or organisation to the best-suited software developer for that particular coding error. The system uses an artificial neural network which, based on the characteristics of the coding errors and the profile of the software developers, automatically generates a match.

The system as described above affords a simple implementation of a computer-implemented method for the handling of coding errors in the computer programs of the projects of a company or organisation. A step comprises acquiring information about the coding errors, e.g. from a coding error queue. Another step comprises acquiring information of the profile and experience of available software developers. All this information is processed by an artificial neural network and a matching is generated, which assigns automatically at least one software developer to each coding error. The matching list is then released as a matching signal to be further processed.

An advantage of the present invention is that, through the use of machine learning, the sophisticated process required to match bug-fixing to a software developer, which in sizeable organizations can become very complex, can be fully automatized, systematized and optimized.

Another advantage of the present invention is that it is not limited to operate at the local level of a team or a project, but thanks to its decentralized design it has a broader scope which can be extended to a whole company level. This way the bug-fixing expertise and resources in the company are efficiently deployed.

Advantageous embodiments and further developments follow from the dependent claims as well as from the description of the different preferred embodiments illustrated in the accompanying figures.

According to some of the embodiments, refinements, or variants of embodiments, the output interface is further configured to send an accept/decline request signal to a selected software developer, wherein upon decline of the accept/decline request, an accept/decline request signal is sent to another selected software developer. In practice, the artificial neural network matches each coding error with an ordered list of software developers. Whenever a software developer declines to work on a coding error, a new signal is sent to the next software developer in the ordered list. Optimally, a new signal can be automatically triggered whenever a software developer declines. The decline can be effectively triggered by a software developer (e.g. by pressing a button on an application) or it can be triggered after a predetermined time. For instance, if a software developer does not respond to a received accept/decline request within twenty-four hours, a decline response is automatically generated.

According to some of the embodiments, refinements, or variants of embodiments, upon acceptance of the accept/decline request by a software developer, the output interface is further configured to assign a corresponding task to the selected software developer. In some embodiments, the system has a more sophisticated implementation, wherein it can be used as a task-management tool for bug-fixing.

According to some of the embodiments, refinements, or variants of embodiments, the output interface is further configured to release the matching signal and/or the accept/decline request signal to an application program on a portable user equipment. All the signals released by the system are most advantageously sent through an application that can be installed e.g. on a cellphone. This way the software developers can easily have real-time access to the coding errors to which they have been matched by the system.

According to some of the embodiments, refinements, or variants of embodiments, the output interface is further configured to receive a signal when the assigned task is completed and send a signal to remove the coding error from the coding error queue. The received signal may come directly from the software developer and can be transmitted within an application program, preferably the same with which the task was generated. The task is closed by updating the coding error queue through the elimination of the coding error.

According to some of the embodiments, refinements, or variants of embodiments, the profile of an available software developer comprises at least an information about: (a) the history of coding errors fixed by the software developer; and/or (b) the work experience of the software developer in similar projects; and/or (c) the momentary workload of the software developers. This information can be stored in a database, from which it can be retrieved e.g. by the matching entity. The database can be part of the system or external to it. In some preferred embodiments, the system itself updates the database after the completion of each task.

According to some of the embodiments, refinements, or variants of embodiments, the information about the coding error comprises at least the code itself and at least metadata about the type of coding error and/or the programming language of the computer program and/or the associated project. This information can be gathered directly by the input interface acting as a bug-tracking tool or can be retrieved from an existing bug-tracking tool external to the system.

According to some of the embodiments, refinements, or variants of embodiments, the computer-implemented system is further configured to manage a coding error queue. In some embodiments, the system can be implemented to have functionalities beyond those of a bug-matching tool and closer to a bug-management tool.

According to some of the embodiments, refinements, or variants of embodiments, the matching entity is further configured to estimate a time required to fix the coding error by the selected software developer. Based, for instance, on records of previously solved coding errors, an average time to fix the bug can be estimated. This can be particularly advantageous for the software developer to plan his/her schedule and eventually accept or decline to work on fixing a coding error.

According to some of the embodiments, refinements, or variants of embodiments, the matching entity is further configured to suggest a solution for the coding error based on the previous solutions of similar coding errors. Past coding errors are identified as similar to the detected one by the artificial neural network. The solution to those past coding errors is then communicated. In other embodiments, the past coding errors can also be listed, such that the software developer can use this information to solve the coding error.

Suggestions for a solution can also be useful when no suitable software developer is available. In that case, the fix can be implemented by a non-expert.

According to some of the embodiments, refinements, or variants of embodiments, the coding error belongs to an open-source project. In big projects where the tasks are distributed among a large amount of people, some of them without knowing each other, the system of the invention is particularly advantageous. In open-source projects (and also in company-wide inner source projects), the management of bug-fixing is complex, and the responsibilities may not be well-defined. The decentralized bug-matching system of the invention facilitates that bug-fixing is sent to the optimal developer available.

According to some of the embodiments, refinements, or variants of embodiments, the computer-implemented system is implemented in Jira or in any other project management tool. The system of the invention can be integrated into state-of-the-art project management tools at different levels. In embodiments discussed in the foregoing it has already been discussed that the system of the invention can act as a bug-tracking system, but also as a coding error queue management system. This versatility allows the system to adapt to companies with different needs. A company who is using Jira might want to implement the system of the invention as a package for smart bug-matching. Other companies might want to have a self-contained end-to-end product that can act as a stand-alone project management tool.

Although here, in the foregoing and also in the following, some functions are described as being performed by entities and interfaces, it shall be understood that this does not necessarily mean that such entities and interfaces are provided separate from one another. In cases where entities and interfaces or parts thereof are provided as software, they may be implemented by program code sections or program code snippets, which may be distinct from one another, but which may also be interwoven or integrated into one another.

Similarly, in cases where entities or interfaces are provided as hardware, the functions of the entities and interfaces or parts thereof may be provided by one and the same hardware component, or the functions of several of them may be distributed over several hardware components, which need not necessarily correspond to the entities or interfaces. Thus, any system or method which exhibits all of the features and functions ascribed to a specific entity or interface shall be understood to comprise, or implement, the corresponding entity or interface. In particular, it is a possibility that the whole system of the invention is implemented by program code executed by a computing device, for example a server or a cloud computing platform.

The above embodiments and implementations can be combined with each other as desired, as far as this is reasonable.

Further scope of the applicability of the present method and system will become apparent from the following figures, detailed description and claims. However, it should be understood that the detailed description and specific examples, while indicating preferred embodiments of the invention, are given by way of illustration only, since various changes and modifications within the spirit and scope of the invention will become apparent to those skilled in the art.

Aspects of the present disclosure will be better understood with reference to the following figures. The components in the drawings are not necessarily to scale, emphasis being placed instead upon clearly illustrating the principles of the present disclosure. Parts in the different figures that correspond to the same elements have been tagged with the same reference numerals.

In the figures:
Fig. 1 is a schematic depiction of a computer-implemented system for the handling of coding errors in computer programs belonging to projects according to an embodiment of the present invention;
Fig. 2 is a block diagram showing an exemplary embodiment of a computer-implemented method for the handling of coding errors in computer programs belonging to projects;
Fig. 3 is a flow diagram of the training of the artificial neural network implemented in the matching entity according to an embodiment of the present invention;
Fig. 4 is a schematic flow diagram illustrating the operation of the computer-implemented system and method according to an embodiment of the present invention;
Fig. 5 is a schematic illustration of how the computer-implemented method can be implemented according to an embodiment of the present invention;
Fig. 6 is a schematic block diagram illustrating a computer program product according to an embodiment of the third aspect of the present invention; and
Fig. 7 is a schematic block diagram illustrating a non-transitory computer-readable data storage medium according to an embodiment of the fourth aspect of the present invention.

The figures might not be to scale, and certain components can be shown in generalized or schematic form in the interest of clarity and conciseness. In some instances, well-known structures and devices are shown in block diagram form in order to avoid obscuring the concepts of the present invention. Likewise, the numeration of the steps in the methods are meant to ease their description. They do not necessarily imply a certain ordering of the steps. In particular, several steps may be performed concurrently.

The detailed description includes specific details for the purpose of providing a thorough understanding of the present invention. However, it will be apparent to those skilled in the art that the present invention may be practised without these specific details.

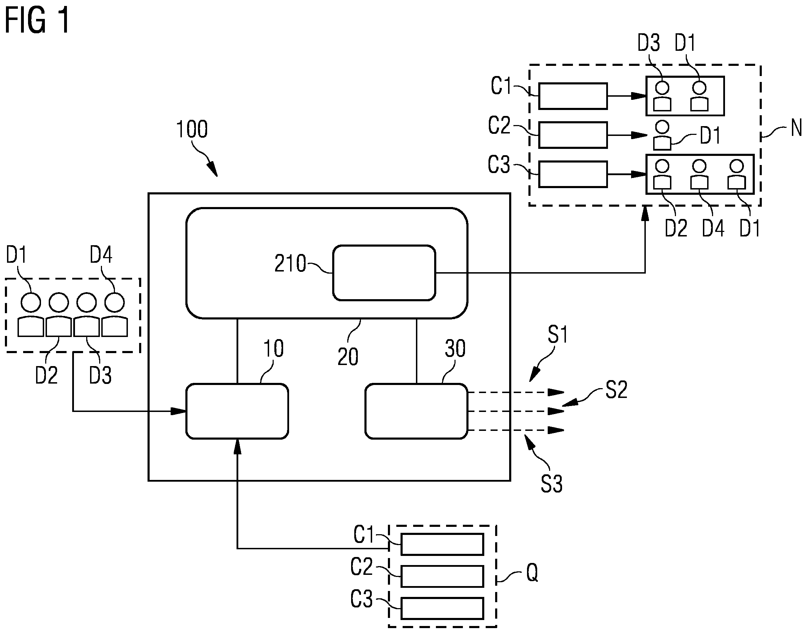

Fig. 1 shows a schematic depiction of a computer-implemented system 100 for the handling of coding errors in computer programs belonging to projects according to an embodiment of the present invention.

The system 100 in Fig. 1 comprises an input interface 10, a matching entity 20 and an output interface 30. Each of the input interface 10 and/or the matching entity 20 and/or the output interface 30 comprises a device or set of devices configured to acquire data and deliver it for further processing. They might be realized in hardware and/or software, and in any combination thereof. They may be implemented partially and/or completely in a local apparatus, such as a computer or a portable use equipment (e.g. a cellphone) and/or partially and/or completely in a remote system such as a cloud computing platform.

The input interface 10 and/or and/or the matching entity 20 and/or the output interface 30 may further comprise at least a central processing unit, CPU, and/or at least one graphics processing unit, GPU, and/or at least one field-programmable gate array, FPGA, and/or at least one application-specific integrated circuit, ASIC and/or any combination of the foregoing, as well as a working memory operatively connected to the at least one CPU and/or a non-transitory memory operatively connected to the at least one CPU and/or the working memory.

The input interface 10 and/or the output interface 30 may comprise an interface to an intranet or the Internet, to a cloud computing service, to a remote server and/or the like. In particular, they can be implemented in cell phones and other portable user equipment.

The input interface 10 is configured to acquire information about coding errors C1-C3 belonging to a coding error queue Q, together with information about a set of available software developers D1-D4.

The coding error information associated with each of the coding errors C1-C3 may comprise the code itself, or at least a link to where the code is to be found, as well as information about the projects and the computer programs to which the coding errors C1-C3 belong. It may also contain information about the technology used (e.g. coding language) as well as information about the time when the coding error was detected.

The information about the available software developers D1-D4 may comprise information about the history of coding errors fixed by the respective software developers D1-D4, their work experience in similar projects, and/or their momentary workload.

The matching entity 20 is an artificial intelligence entity, which is configured to implement an artificial neural network 210, ANN. The ANN uses as input the information about each coding error C1-C3 and each available software developer D1-D4 and generates a matching N, where each coding error C1-C3 is assigned at least one potential software developers. In some preferred embodiments, like the one illustrated in Fig. 1, the matching N associates each coding error C1-C3 with a list of available software developers. In Fig. 1, the coding error C1 is matched to the software developer D3 as a first option, and the software developer D1 as a second option. The coding error C2 is matched to the software developer D1 alone with no further options. The coding error C3 is matched to the software developer D2 as a first option, to the software developer D4 as a second option, and the software developer D1 as a third option. The order in which the option appear brings the best match first.

The output interface 30 is configured to generate corresponding matching signals S1-S3 corresponding to the matching N. This matching signals S1-S3 can be delivered to a server or to an application, which can be accessed e.g. by the project manager/s of the project where each of the coding errors C1-C3 were detected.

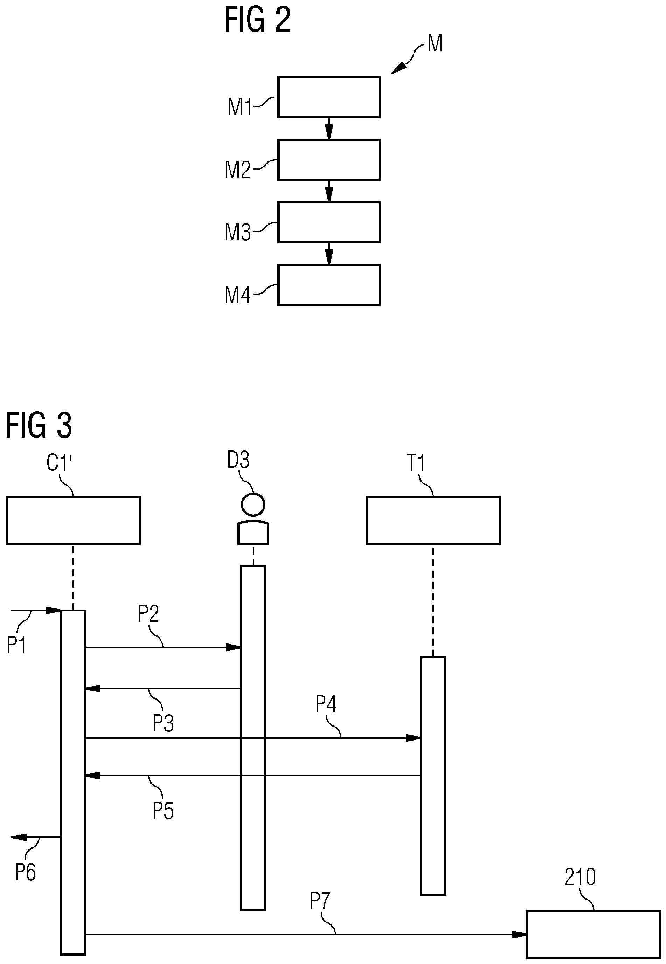

Fig. 2 is a block diagram showing an exemplary embodiment of a computer-implemented method M for the handling of coding errors in computer programs belonging to projects. In a first step M1, information about a set of detected coding errors C1-C3 belonging to a coding error queue Q is acquired. In another step M2, information about the profiles of a set of available software developers D1-D4 is obtained. The information acquired in steps M1 and M2 is used in a further step M3 by an artificial neural network 210, configured and train to process the information acquired in steps M1 and M2 in order to match each of the detected coding errors C1-C3 to one or more of the available software developers D1-D4. In a step M4, a matching signal S1;S2;S3 is released, based on the matching N generated by the artificial neural network 210, which can be sent to a server, to an application or as a private email/message.

Fig. 3 is a flow diagram showing schematically the training of the artificial neural network 210 implemented in the matching entity 20 according to an embodiment of the present invention. The figure shows a coding error C1', which was detected at a certain point in time P1. The coding error C1' was assigned to a software developer D3 at a time P2 according to some procedure not involving the ANN 210, e.g. through a direct request of the project manager of the project where the coding error C1' was found. The selected software developer D3 worked on the coding error C1' and delivered a fix at a point in time P3. The fix was subsequently tested at P4 using a test case T1. The result of the test was communicated back at P5, e.g. to a coding error queue manager, which considered the test successful and tagged the coding error C1' at P6 as solved. The information used by the project manager regarding the coding error C1' and the profile information of the software developer D3 are used at P7 as a training datapoint to train the ANN 210. The ANN 210 may also use information about the time required to fix the coding error C1'. The process schematically depicted in Fig. 3 is repeated for a number of additional coding errors (not shown in the figure), e.g. belonging to the historical record of fixed coding errors in a project or in all projects within a company or organization. This historical record comprises the training dataset of the ANN 210. Some of the fixed coding errors can be left out of the training dataset and used as validation for the ANN 210.

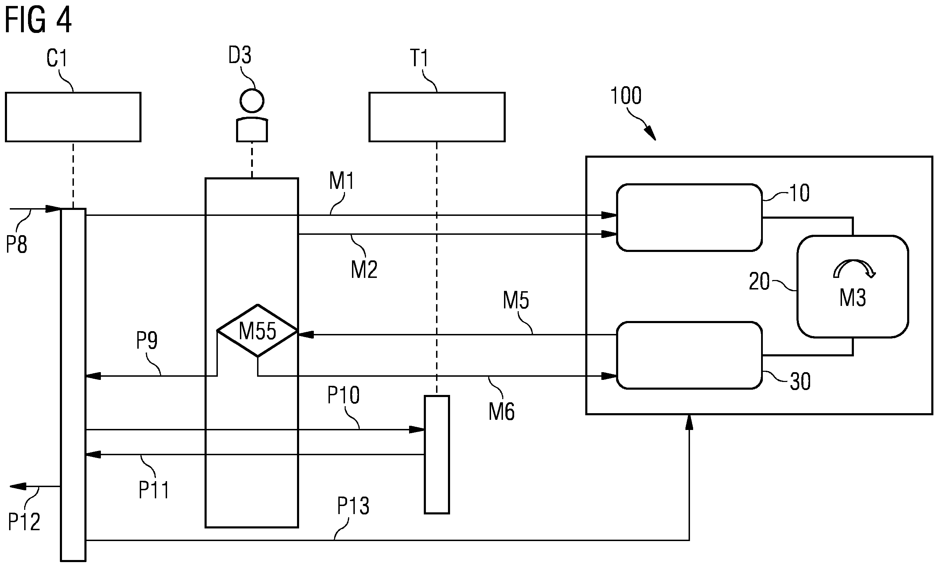

Fig. 4 is a schematic flow diagram illustrating the operation of the computer-implemented system 100 and method M according to an embodiment of the present invention. At a time P8 a coding error C1 is added to a coding error queue Q, wherein the coding error queue Q belongs either to a particular project or is run at a company-wide level. In a step M1, the system 100 retrieves the available information about the coding error C3, e.g. the project where it belongs, the technology used in that particular project (coding language, etc.). Information about the profiles of the available software developers D1-D4 is collected in a step M2. This information can be stored in a database (not shown in the figure), which gets updated based on the new coding errors fixed, the availability of the software developers, and also every time a software developer leaves the company or a new one joins the company. In step M3 a matching N in the matching entity 20, which selects the software developer D3. This matching N is used to generate a matching signal (not shown in the figure) by the output interface 30.

In the embodiment depicted in Fig. 4, the output interface 30 is further configured to send M5 an accept/decline request signal to the selected software developer D3, e.g. via an application. In a step M55, the software developer D3 responds to the accept/decline request. If the request is accepted, a task is assigned to the software developer D3, which works on the coding error C1 and provides a fix at time P9. If the accept/decline request is declined, the information is sent M6 to the output interface 30, which sends a new accept/decline request signal to another software developer (not shown in the figure), which in turn can accept the request or decline the request. This procedure gets iterated until one software developer of the available software developers D1-D4 accepts the request. If all the available software developers D1-D4 decline the request, in some embodiments the output interface 30 releases a signal with a suggested fix for the coding error C1 based, e.g. on the solutions used in the past to fix similar coding errors. This information may also be released if a software developer D1-D4 accepts the accept/decline request. In this case, the suggestion can be used by the software developer as a guidance to fix the coding error C1.

At time P10 the fix sent at P9 is tested on a test case T1. The selection of the test case T1 and the running of the test can be done manually by another software developer. The result of the test is sent back at P11 and, if successful, the coding error C3 is tagged as solved and removed at P12 from the coding error queue Q. In the embodiment of Fig. 4, this removal can be prompted by the system 100 itself, e.g. through the output interface 30.

The information on the fix is acquired at P13 by the system 100. The profiles of the software developers D1-D4 involved (in this case at least D3) are updated in a step M7 (not shown in the figure).

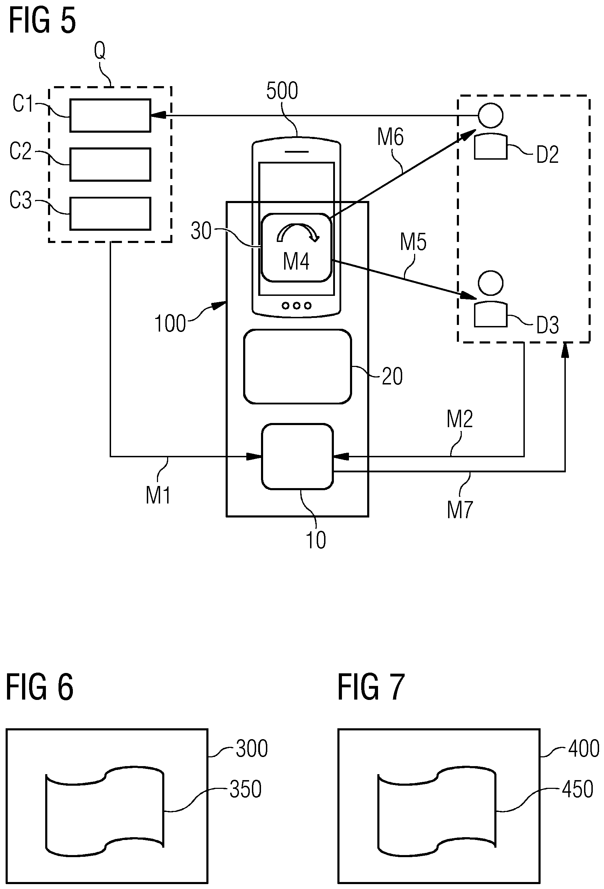

Fig. 5 shows a schematic illustration of how the computer-implemented system 100 and method M can be implemented according to an embodiment of the present invention, with a focus in the interaction between the system 100 and the software developers D1-D4. For simplicity, only the software developers D2 and D3 are shown in the figure.

The system 100, through the input interface 10, acquires in a step M1 information from coding errors C1-C3 belonging to a coding error queue Q and information M2 from the profile of a set of available software developers D2, D3. The matching entity 20, through an ANN 210 (not shown in the figure) generates in a step M3 a matching N of coding errors C1-C3 to available software developers D2, D3. For concreteness, let us imagine that the coding error C1 is matched to the software developer D3. The output interface 30 releases in a step M4 a matching signal that can be visualized with an application installed on a portable user equipment (e.g. a cell phone 500). The output interface 30 can send in a step M5 an accept/decline request signal to the selected software developer D3 to fix the coding error C1. In the example used in Fig. 5, the software developer D3 declines the request and in a step M6 a new accept/decline request signal is sent to the software developer D2, which accepts the request. A task is assigned and the selected software developer D2 works on the assigned coding error C1 and delivers a fix. When the fix is approved, e.g. after it has gone through some testing (see in particular the description corresponding to Fig. 4), the information about the fix is communicated to the system 100 and the profiles of the software developers D2, D3 are updated in a step M7. In the embodiment illustrated in Fig. 5 the update is operated by the system 100 itself. In this case, the system 100 extends beyond a matching system 100 and acquires functions of a bug-management tool. In this case, the information of the profile of the software developers D1-D4 can be in a database either physically inside the system 100 or on a server or a cloud platform, from which the system 100 can request and to which the system 100 can submit information.

Fig. 6 shows a schematic block diagram illustrating a computer program product 300 according to an embodiment of the third aspect of the present invention. The computer program product 300 comprises executable program code 350 configured to, when executed, perform the method M according to any embodiment of the second aspect of the present invention, in particular as it has been described with respect to the preceding figures.

Fig. 7 shows a schematic block diagram illustrating a non-transitory computer-readable data storage medium 400 according to an embodiment of the fourth aspect of the present invention. The data storage medium 400 comprises executable program code 450 configured to, when executed, perform the method M according to any embodiment of the second aspect of the present invention, in particular as it has been described with respect to the preceding figures.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, an USB memory stick or the like.

The previous description of the disclosed embodiments are merely examples of possible implementations, which are provided to enable any person skilled in the art to make or use the present invention. Various variations and modifications of these embodiments will be readily apparent to those skilled in the art, and the generic principles defined herein may be applied to other embodiments without departing from the spirit or scope of the present disclosure. Thus, the present invention is not intended to be limited to the embodiments shown herein but it is to be accorded the widest scope consistent with the principles and novel features disclosed herein. Therefore, the present invention is not to be limited except in accordance with the following claims.

## Claims

1. A computer-implemented system (100) for the handling of coding errors (C1-C3) in computer programs belonging to projects, comprising:
an input interface (10), configured to acquire information about a coding error (C1-C3) of a computer program belonging to a project, wherein the coding error (C1-C3) is part of a coding error queue (Q), and to acquire a profile of available software developers (D1-D4);
a matching entity (20), configured to implement an artificial neural network (210), which is adapted to match the coding error (C1-C3) with at least one selected software developer from the available software developers (D1-D4); and
an output interface (30), configured to release a matching signal (S1-S3), based on the match generated by the artificial neural network (210).

2. The computer-implemented system (100) according to claim 1, wherein the output interface (30) is further configured to send an accept/decline request signal to a selected software developer (D1-D4), wherein upon decline of the accept/decline request an accept/decline request signal is sent to another selected software developer (D1-D4).

3. The computer-implemented system (100) according to claim 2, wherein upon acceptance of the accept/decline request, the output interface (30) is further configured to assign a corresponding task to the selected software developer (D1-D4).

4. The computer-implemented system (100) according to claims 1 to 3, wherein the output interface (30) is further configured to release the matching signal and/or the accept/decline request signal to an application program on a portable user equipment (500).

5. The computer-implemented system (100) according to any of the previous claims, wherein the output interface (30) is further configured to receive a signal when the assigned task is completed and send a signal to remove the coding error (C1-C3) from the coding error queue (Q).

6. The computer-implemented system (100) according to any of the previous claims, wherein the profile of an available software developer (D1-D4) comprises at least an information about:
a history of coding errors fixed by the software developer (D1-D4); and/or
a work experience of the software developer (D1-D4) in similar projects; and/or
a momentary workload of the software developers (D1-D4).

7. The computer-implemented system (100) according to any of the previous claims, wherein the information about the coding error (C1-C3) comprises at least the code itself and at least metadata about the type of coding error and/or the programming language of the computer program and/or the associated project.

8. The computer-implemented system (100) according to any of the previous claims, further configured to manage a coding error queue (Q).

9. The computer-implemented system (100) according to any of the previous claims, wherein the matching entity (20) is further configured to estimate a time required to fix the coding error (C1-C3) by the selected software developer (D1-D4) .

10. The computer-implemented system (100) according to any of the previous claims, wherein the matching entity (20) is further configured to suggest a solution for the coding error (C1-C3) based on the previous solutions of similar coding errors (C1').

11. The computer-implemented system (100) according to any of the previous claims, wherein the coding error (C1-C3) belongs to an open-source project.

12. The computer-implemented system (100) according to any of the previous claims, wherein the computer-implemented system (100) is implemented in Jira or in any other project management tool.

13. A computer-implemented method (M) for the handling of coding errors (C1-C3) in computer programs belonging to projects, preferably to be implemented with the computer-implemented system (100) according to claims 1 to 12, comprising the following steps:
acquiring (M1) information about at least one detected coding error (C1-C3) of a computer program belonging to a project, wherein the coding error is part of a coding error queue (Q);
acquiring (M2) information about available software developers (D1-D4);
matching (M3), using an artificial neural network (210) configured and trained to receive information about the detected coding error (C1-C3) and information about available software developers (D1-D4), the coding error (C1-C3) with at least one selected software developer from the available software developers (D1-D4); and
releasing (M4) a matching signal (S1-S3), based on the match generated by the artificial neural network (210).

14. A computer program product (300) comprising executable program code (350), which is configured, when executed, to perform the computer-implemented method (M) according to claim 13.

15. A non-transient computer-readable data storage medium (400) comprising executable program code (450), which is configured, when executed, to perform the computer-implemented method (M) according to claim 13.
